# EUROPEAN PATENT APPLICATION

(11) **EP 4 230 011 A1**
(43) Date of publication of application: **23.08.2023**
(21) Application number: 23154395.0
(22) Date of filing: 01.02.2023
(51) Int. Cl.: A01B 69/04, A01B 69/00

(54) **AREA SETTING METHOD, WORK VEHICLE, AND AUTOMATIC TRAVELING SYSTEM**

(30) Priority: 17.02.2022 JP 2022022970
(71) Applicant: Yanmar Holdings Co., Ltd., Osaka-shi, Osaka (JP)
(72) Inventor: SUZUKI, Hidetaka, Okayama (JP); MURAYAMA, Masaaki, Okayama (JP); YAMAGUCHI, Yuji, Okayama (JP); NISHII, Yasuto, Okayama (JP)
(74) Representative: Novagraaf International SA

(57) **Abstract**

[Problem] Provided is an area setting method, a work vehicle, and an automatic traveling system that can set a creation-capable area so that no work remaining area occurs.

[Solution] A work vehicle, such as a combine harvester 1, comprises a portable terminal 40, and the portable terminal 40 comprises a control device 41. The control device 41 functions as an outline setting section 50 for setting a field outline 60, a creation-capable area setting section

51 for setting a creation-capable area 63 that is provided inside the field outline 60 and in which an automatic traveling route 64 can be created, and a range changing section 53 for changing a range of the creation-capable area 63.

## Description

### TECHNICAL FIELD

The present invention relates to an area setting method, a work vehicle, and an automatic traveling system that can set an area in which a work vehicle performs automatic traveling in a field.

### BACKGROUND ART

Conventionally, some work vehicles such as combine harvesters can create an automatic traveling route in a predetermined area in a field and executing automatic reaping traveling to perform reaping work while traveling automatically along the automatic traveling route. In order to create an automatic traveling route, the work vehicle needs to know the outline of the field and the area in which an automatic traveling route can be created inside the field (creation-capable area).

For example, Patent Document 1 discloses an automatic traveling system using a traveling speed control device. The automatic traveling system is applied to a tractor as a work vehicle and comprises an automatic traveling unit and a portable communication terminal. The portable communication terminal comprises a terminal electronic control unit having various control programs, etc. The terminal electronic control unit has a work area setting section that sets a work area for the tractor to perform a predetermined work in the traveling area and a traveling route setting section that sets a target traveling route. The work area set by the work area setting section is the area in which the predetermined work is performed while the tractor is automatically traveling. The work area setting section sets the work area inside the traveling area with the obtained spaces being secured at the inner side of the outer peripheral part of the traveling area.

### PRIOR ART DOCUMENT

### PATENT DOCUMENT

Patent Document 1 : Japanese Unexamined Patent Application Publication No. 2021-176094

### SUMMARY OF INVENTION

### TECHNICAL PROBLEM

When the work area of the patent document 1 is applied to a work vehicle such as a combine harvester that works from the outer periphery of a field, it is necessary to perform work traveling such as manual reaping traveling along the outer periphery of the field (traveling area) with up to the creation-capable area (work area) as a target and to create an automatic traveling route in the unworked region left in the creation-capable area. The combine harvester then performs automatic reaping traveling along the automatic traveling route in the creation-capable area. However, when the combine harvester performs a manual reaping traveling around the periphery of a target creation-capable area, there are cases in which the combine harvester cannot travel along the outer periphery of the creation-capable area, and the unworked region may be left protruding from the creation-capable area. When automatic reaping traveling is performed for the creation-capable area in such a condition, a remaining unreaped area occurs, or in other words, a work remaining area occurs.

The purpose of the present invention is to provide an area setting method, a work vehicle, and an automatic traveling system that can set a creation-capable area so that no work remaining area occurs.

### SOLUTION TO PROBLEM

To solve the above problem, the area setting method of the present invention is an area setting method for setting an area in which a work vehicle performs automatic traveling in a field, the area setting method comprises an outline setting step of setting a field outline, a creation-capable area setting step of setting a creation-capable area that is provided inside the field outline and in which an automatic traveling route can be created, and a range changing step of changing a range of the creation-capable area.

In addition, to solve the above problem, the work vehicle of the present invention is a work vehicle that performs automatic traveling in a field, the work vehicle comprises an outline setting section setting a field outline, a creation-capable area setting section setting a creation-capable area that is provided inside the field outline and in which an automatic traveling route can be created, and a range changing section changing a range of the creation-capable area.

In addition, to solve the above problem, the automatic traveling system of the present invention is an automatic traveling system for causing a work vehicle to perform automatic traveling in a field, the automatic traveling system comprises an outline setting section setting a field outline, a creation-capable area setting section setting a creation-capable area that is provided inside the field outline and in which an automatic traveling route can be created, and a range changing section changing a range of the creation-capable area.

### ADVANTAGEOUS EFFECTS OF INVENTION

The present invention provides an area setting method, a work vehicle, and an automatic traveling system that can set a creation-capable area so that no work remaining area occurs.

### BRIEF DESCRIPTION OF DRAWINGS

Fig. 1 is a side view of a combine harvester according to an embodiment of the present invention.
Fig. 2 is a block diagram of the combine harvester according to the embodiment of the present invention.
Fig. 3 is a plan view illustrating a work screen in which an example of a field is displayed schematically in the combine harvester according to the embodiment of the present invention.
Fig. 4 is a plan view illustrating a work screen in which another example of a field is displayed schematically in the combine harvester according to the embodiment of the present invention.
Fig. 5 is a block diagram of a portable terminal in the combine harvester according to another embodiment of the present invention.
Fig. 6 is a block diagram of a portable terminal in the combine harvester according to still another embodiment of the present invention.

### DESCRIPTION OF EMBODIMENTS

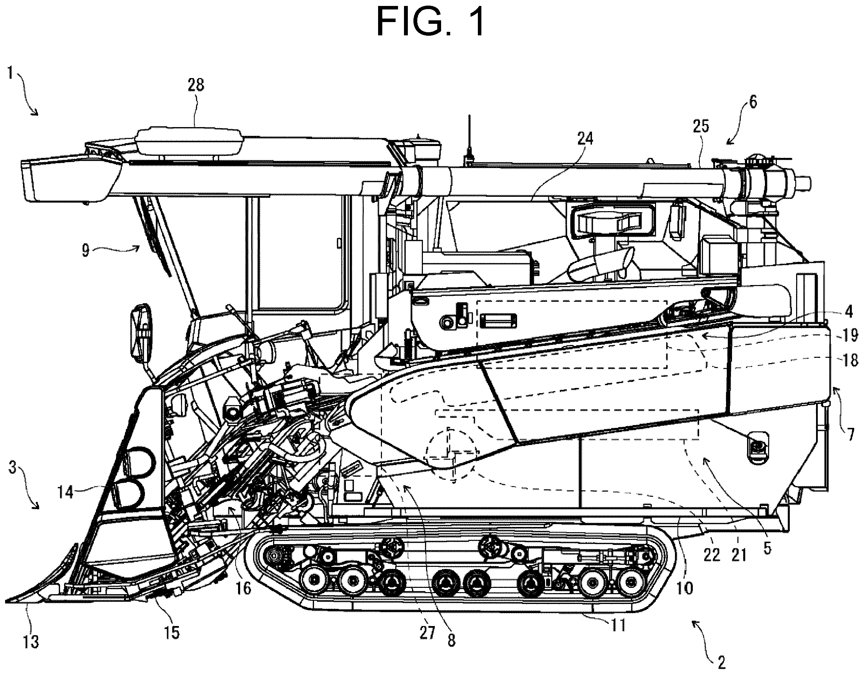

A combine harvester 1 according to an embodiment of the present invention will be described with reference to Fig. 1 and other drawings. The combine harvester 1 is an example of a work vehicle that performs work traveling for performing work while manually traveling or automatically traveling along a predetermined work route. The combine harvester 1 travels in a field as a target to be worked by automatic traveling or manual operation, and performs work such as reaping for performing harvest work of crops from grain culms planted in the field. The combine harvester 1 is, for example, configured to perform automatic work in which steering is controlled by automatic traveling while the traveling speed is controlled in response to manual operation, or unmanned work in which the steering and the traveling speed are controlled by automatic traveling, and can travel, turn, and work autonomously in a field.

While traveling on straight rows, a predetermined number of which within the reaping possible row number is a reaping width (working width), relative to a plurality of rows of grain culms, the combine harvester 1 performs reaping work for the straight rows. The combine harvester 1 is set to a traveling mode of any of a manual traveling mode and an automatic traveling mode. The combine harvester 1 is so configured as to perform, when being set to the manual traveling mode, the manual traveling according to steering of a steering part 9 by a worker.

Meanwhile, the combine harvester 1 is so configured as to perform, when being set to the automatic traveling mode, automatic reaping traveling for performing reaping work while traveling automatically in accordance with an automatic traveling route set in the field. For example, in an area of the field with unreaped grain culms (hereinafter referred to as "unworked region"), the combine harvester 1 sets an area in which automatic reaping traveling is performed, i.e., an area in which an automatic traveling route can be created (creation-capable area). Then, the combine harvester 1 creates an automatic traveling route in the creation-capable area, so that the combine harvester 1 performs the automatic reaping traveling with a traveling pattern such as reciprocating reaping in which the combine harvester 1 reciprocates between a plurality of straight routes, or circumference reaping in which reaping is repeated by shifting the circumference of the straight route along an inner periphery of the unworked region toward the center side of the unworked region.

Before performing the automatic reaping traveling along the automatic traveling route, the combine harvester 1 performs outer periphery reaping traveling, in which the combine harvester 1 travels circularly along the outer peripheral shape of the field while reaping, so that a headland area is formed in the field. In this case, the combine harvester 1 performs the outer periphery reaping traveling with up to the outer periphery of the creation-capable area as a target. The combine harvester 1 may perform the outer periphery reaping traveling by manual traveling or automatic traveling.

As illustrated in Fig. 1, the combine harvester 1 includes a traveling part 2, a reaping part 3, a threshing part 4, a sorting part 5, a storage part 6, a discharged straw processing part 7, a power part 8, and the steering part 9, and is composed of a so-called head-feeding type combine harvester. The combine harvester 1 travels by the traveling part 2, threshes grain culms reaped by the reaping part 3 in the threshing part 4, sorts the grains in the sorting part 5, and stores the grains in the storage part 6. The combine harvester 1 causes the discharged straw processing part 7 to process the threshed discharged straw. The combine harvester 1 drives the traveling part 2, the reaping part 3, the threshing part 4, the sorting part 5, the storage part 6, and the discharged straw processing part 7 with power supplied by the power part 8.

The traveling part 2 is provided below a machine body frame 10, and includes a left-and-right pair of crawler type traveling devices 11, and a transmission (not illustrated). The traveling part 2 causes the combine harvester 1 to travel in the front-rear direction, or causes the combine harvester 1 to turn in the left-right direction by rotating crawlers of the crawler type traveling devices 11 with power (for example, rotational power) transmitted from an engine 27 of the power part 8. The transmission transmits the power (rotational power) of the power part 8 to the crawler type traveling devices 11, and is capable of shifting the rotational power.

The reaping part 3 is provided in front of the traveling part 2, and performs reaping work for the rows within the reaping possible row number.

The reaping part 3 includes a divider 13, a raising device 14, a cutting device 15, and a conveying device 16. The divider 13 divides the grain culms in the field for each row, and guides, to the raising device 14, the grain culms for the predetermined number of rows within the reaping possible row number. The raising device 14 raises the grain culms guided by the divider 13. The cutting device 15 cuts the grain culms raised by the raising device 14.

The conveying device 16 conveys the grain culms cut by the cutting device 15 to the threshing part 4.

The threshing part 4 is provided behind the reaping part 3. The threshing part 4 includes a feed chain 18, and a threshing cylinder 19. The feed chain 18 conveys, for threshing, the grain culms conveyed from the conveying device 16 of the reaping part 3, and further conveys the grain culms after threshing, that is, discharged straw to the discharged straw processing part 7. The threshing cylinder 19 threshes the grain culms conveyed by the feed chain 18.

The sorting part 5 is provided below the threshing part 4. The sorting part 5 includes a swing sorting device 21, a blower sorting device 22, a grain conveying device (not illustrated), and a waste straw discharging device (not illustrated). The swing sorting device 21 sifts the threshed grains that fall from the threshing part 4 and sorts the threshed grains into grains, waste straws, and the like. The blower sorting device 22 further sorts the threshed grains sorted by the swing sorting device 21 into grains and waste straws and the like by air blow. The grain conveying device conveys the grains sorted by the swing sorting device 21 and the blower sorting device 22 to the storage part 6. The waste straw discharging device discharges the waste straw and the like sorted by the swing sorting device 21 and the blower sorting device 22 to the outside of the combine harvester.

The storage part 6 is provided on the right side of the threshing part 4. The storage part 6 includes a grain tank 24, and a discharging device 25. The grain tank 24 stores the grains conveyed from the sorting part 5. The discharging device 25 is composed of an auger or the like, and discharges the grains stored in the grain tank 24 to any place.

The discharged straw processing part 7 is provided behind the threshing part 4. The discharged straw processing part 7 includes a discharged straw conveying device (not illustrated), and a discharged straw cutting device (not illustrated). The discharged straw conveying device conveys the discharged straw conveyed from the feed chain 18 of the threshing part 4 to the discharged straw cutting device. The discharged straw cutting device cuts the discharged straws conveyed by the discharged straw conveying device, and discharges the cut discharged straws to the outside of the combine harvester.

The power part 8 is provided above the traveling part 2 and in front of the storage part 6. The power part 8 includes the engine 27 that generates rotational power. The power part 8 transmits the rotational power generated by the engine 27 to the traveling part 2, the reaping part 3, the threshing part 4, the sorting part 5, the storage part 6, and the discharged straw processing part 7.

The steering part 9 is provided above the power part 8. The steering part 9 includes, around a driver's seat which is a seat on which a worker sits, as operation tools for steering the traveling of the combine harvester 1, a steering wheel for instructing turning of the machine body of the combine harvester 1, a main shift lever and a sub-shift lever for instructing change of the forward and backward traveling speed of the combine harvester 1. The manual traveling of the combine harvester 1 is performed by the traveling part 2 that receives operations of the steering part 9's steering wheel, the main shift lever, and the sub-shift lever. The steering part 9 includes a mechanism for operating the reaping work by the reaping part 3, the threshing work by the threshing part 4, the discharge work by the discharging device 25 of the storage part 6, and other work.

The combine harvester 1 includes a positioning unit 28 that acquires an own vehicle position of the combine harvester 1 by using a satellite positioning system such as a GPS. The positioning unit 28 receives a positioning signal from a positioning satellite via a positioning antenna, and acquires position information of the positioning unit 28, that is, the own vehicle position of the combine harvester 1 on the basis of the positioning signal.

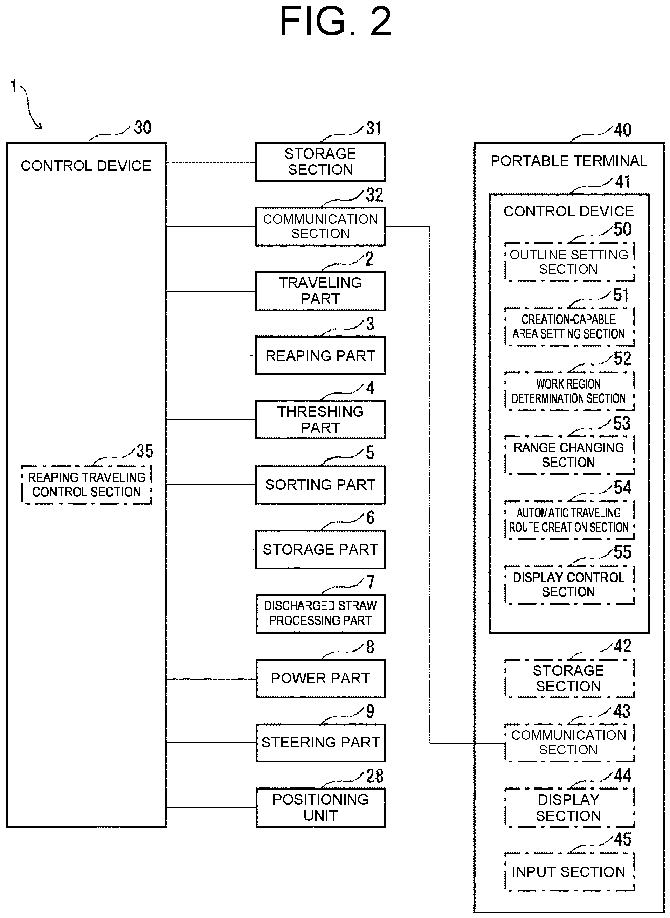

Next, a control device 30 of the combine harvester 1 will be described with reference to Fig. 2. The control device 30 is composed of a computer such as a CPU, and is connected to a communication section 32 that communicates with a storage section 31 such as a ROM, a RAM, a hard disk drive, and a flash memory, and an external device.

The storage section 31 stores a program and data for controlling various types of constituent components and various types of functions of the combine harvester 1, and the control device 30 executes an arithmetic process on the basis of the program and the data stored in the storage section 31, so that the various types of constituent components and the various types of functions are controlled. The control device 30 acquires the own vehicle position of the combine harvester 1 from the positioning unit 28, for example.

The communication section 32 is capable of wirelessly communicating with an external device such as a portable terminal 40 owned by the worker via a wireless communication antenna. The control device 30 controls the communication section 32 thereby to execute the wireless communication with the portable terminal 40, and sends and receives various information to and from the portable terminal 40.

In addition, the control device 30 operates as a reaping traveling control section 35 (work traveling control section) by executing the program stored in the storage section 31. The reaping traveling control section 35 realizes a reaping traveling step (work traveling step) of the automatic traveling method according to the present invention.

The reaping traveling control section 35 is an example of the work traveling control section that controls the work traveling of the combine harvester 1, and in the present embodiment, controls the automatic reaping traveling of the combine harvester 1 in the field when the automatic traveling mode is set. For example, the reaping traveling control section 35 acquires field information and an automatic traveling route set for the field from the portable terminal 40. With the automatic reaping traveling started, the reaping traveling control section 35 acquires, from the positioning unit 28, the own vehicle position of the combine harvester 1, and, based on the own vehicle position, the field information, and the automatic traveling route, controls the power part 8, as well as the traveling part 2 and the reaping part 3 so that the combine harvester 1 performs the automatic reaping traveling along the automatic traveling route.

The portable terminal 40 is one of the constituent components of the combine harvester 1, is a terminal that can remotely operate the combine harvester 1, and is composed of, for example, a tablet terminal equipped with a touch panel, a laptop personal computer, or the like. An operation device similar to the portable terminal 40 may be provided in the steering part 9. In the present invention, the automatic traveling system is constituted by the combine harvester 1 and the portable terminal 40.

As illustrated in Fig. 2, the portable terminal 40 includes a control device 41 composed of a computer such as a CPU, and the control device 41 is connected to a storage section 42 such as a ROM, a RAM, a hard disk drive and a flash memory, and a communication section 43 that communicates with an external device. Further, the portable terminal 40 includes a display section 44, such as a touch panel and a monitor for displaying various information and outputting the various information to the worker, and an input section 45 such as a touch panel and an operation key for receiving an input operation of various information from the worker.

The storage section 42 stores a program and data for controlling various types of constituent components and various types of functions of the portable terminal 40, and the control device 41 executes an arithmetic process on the basis of the program and the data stored in the storage section 42, so that the various types of constituent components and the various types of functions of the portable terminal 40 are controlled. The storage section 42 stores field information and an automatic traveling route of a field that is a target to be worked by the combine harvester 1.

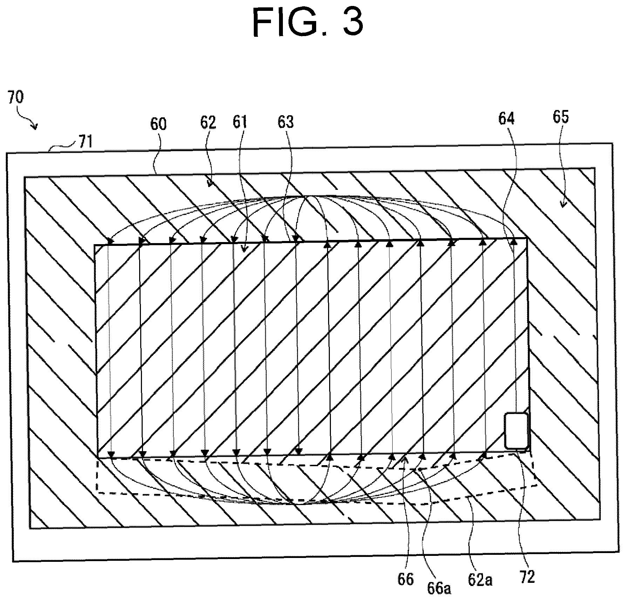

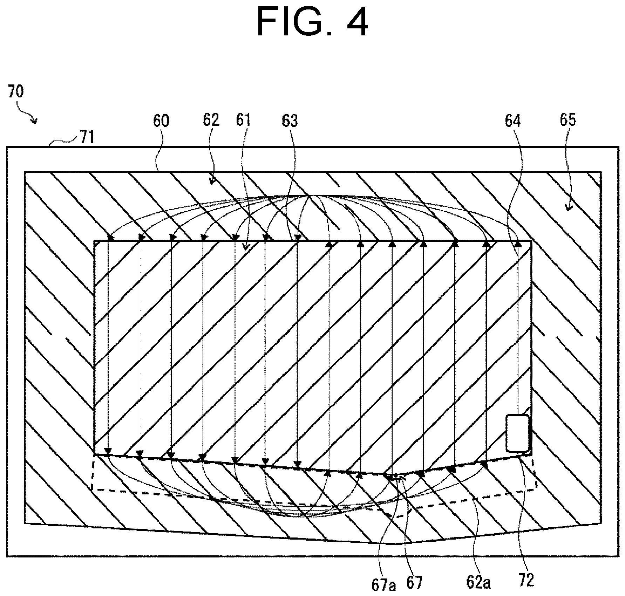

For example, as illustrated in Figs. 3 and 4, the field has, within a field outline 60 along the outer periphery of the field, an unworked region 61 in which reaping or other work has not yet been performed and an already worked region 62 in which work has already been completed. In the field outline 60, a creation-capable area 63 is set up for creating an automatic traveling route 64, and the automatic traveling route 64 is created within the creation-capable area 63. In Figs. 3 and 4, a work screen 70 is illustrated showing the field outline 60, the unworked region 61, the already worked region 62, the creation-capable area 63, and the automatic traveling route 64. The unworked region 61 is shown with hatching downward to the left, and the already worked region 62 is shown with hatching downward to the right. The field information includes, for example, the shape, size, and position information (coordinates, etc.) of the field outline 60, the shape, size, and position information (coordinates, etc.) of the unworked region 61 and the already worked region 62, and the shape, size, and position information (coordinates, etc.) of the creation-capable area 63.

The communication section 43 is communicatively connected to the communication section 32 of the combine harvester 1 via a wireless communication antenna. The control device 41 controls the communication section 43 thereby to perform a wireless communication with the combine harvester 1, and sends and receives various information to and from the combine harvester 1.

The control device 41 of the portable terminal 40 executes the program stored in the storage section 42 and operates as an outline setting section 50, a creation-capable area setting section 51, a work region determination section 52, a range changing section 53, an automatic traveling route creation section 54 (work route creation section), and a display control section 55. In addition, the outline setting section 50, the creation-capable area setting section 51, the work region determination section 52, the range changing section 53, and the display control section 55 realize an outline setting step, a creation-capable area setting step, a work region determining step, a range changing step, and a displaying step of the area setting method according to the present invention. The automatic traveling route creation section 54 realizes the automatic traveling route creating step (work route creating step) of the automatic travel method according to the present invention.

The outline setting section 50 manually or automatically selects a field that is a target to be worked by automatic traveling, sets the outer peripheral shape of the field, that is, the field outline 60, and stores the outer peripheral shape of the field in the storage section 42. For example, the outline setting section 50 displays a field selection screen (not illustrated) on the display section 44 for selecting a field to be worked. When the field information including the field outline 60 is already stored in the storage section 42, the field selection screen makes it possible to select a field corresponding to the field information. When any field is selected on the field selection screen in response to manual operation, the outline setting section 50 selects the selected field as a work target. Then, the outline setting section 50 reads out the field information corresponding to the selected field from the storage section 42 and sets the field outline 60 contained in the read out field information as a work target.

The field selection screen also makes it possible to operate creation of a new field. When creation of a new field is operated on the field selection screen, the outline setting section 50 selects a new field at the own vehicle position of the combine harvester 1 as a work target. When the combine harvester 1, while circling along the outer peripheral shape of the new field, performs the outer periphery reaping traveling, the outline setting section 50 receives, from the combine harvester 1, the combine harvester 1's own vehicle position positioned by the positioning unit 28 of the combine harvester 1, and records the position information of the outer peripheral shape of the new field or the position information of the route of the outer periphery reaping traveling. The outline setting section 50 creates a field outline 60 of the new field based on the position information obtained by the outer periphery reaping traveling, and creates field information including the field outline 60, and stores the field information in the storage section 42. The outline setting section 50 then sets the created field outline 60 as a work target.

The creation-capable area setting section 51 sets the creation-capable area 63 in advance and stores the creation-capable area 63 in the storage section 42. The creation-capable area 63 is an area that is located inside the field outline 60 set as a work target by the outline setting section 50, and is an area in which the automatic reaping traveling along the automatic traveling route 64 can be performed, i.e., in which the automatic traveling route 64 can be created. The creation-capable area setting section 51 sets the creation-capable area 63 in such a manner that the outer periphery of the creation-capable area 63 is formed by a plurality of sides (target sides). The target side of the creation-capable area 63 represents a shape that extends in the extending direction of the field and is not limited to a single straight line, but may include two or more straight lines or curve lines. For example, based on the field outline 60, the creation-capable area setting section 51 sets, inside the field outline 60 along the outer periphery of the field, a headland area 65 for a number of rounds (e.g., one or two rounds) with the combine harvester 1's working width, and sets the creation-capable area 63 inside the headland area 65. Before performing the automatic reaping traveling along the automatic traveling route, the combine harvester 1 performs outer periphery reaping traveling by manual traveling or automatic traveling to leave the unworked region 61 with the outer periphery of the creation-capable area 63 as a target.

The work region determination section 52 determines the unworked region 61 and the already worked region 62 in the field, and based on the result of the determination, stores the information on the unworked region 61 and the already worked region 62 in the storage section 42 as the field information. Before work on the field begins, the unworked region 61 is set over the entire field and the already worked region 62 is not set. While the combine harvester 1 performs reaping traveling in the field regardless of manual traveling or automatic traveling, the work region determination section 52 records a traveling track of reaping traveling performed in the field based on the combine harvester 1's own vehicle position, and sequentially recorded and updated the area on the basis of the traveling track of the reaping traveling and the working width of the combine harvester 1 as the already worked region 62, and deletes the area set as the already worked region 62 from the unworked region 61 to make an update.

The range changing section 53 changes the range of the creation-capable area 63 set for the field in accordance with a predetermined condition automatically or in response to manual operation by the worker. The range changing section 53 can, for example, change the range of the creation-capable area 63 after the outer periphery reaping traveling is performed and before the automatic traveling route 64 is created.

The range changing section 53 automatically changes the range of the creation-capable area 63 based on the difference, as a predetermined condition, between the outer peripheral shape of the unworked region 61 (inner peripheral shape of the already worked region 62) that is recorded for the field and the outer peripheral shape of the creation-capable area 63 that has been set. For example, the range changing section 53 determines whether or not a distance from the creation-capable area 63 to the already worked region 62 is less than a predetermined distance threshold, and if the distance is less than the predetermined distance threshold, the range changing section 53 changes the range of the creation-capable area 63 so that the range is expanded to the already worked region 62. The predetermined distance threshold may be set in advance based on the working width of the combine harvester 1, for example, may be set to a half value of the working width of the combine harvester 1, or may be set arbitrarily by the worker. When automatically expanding the range of the creation-capable area 63, the range changing section 53 may provide advance notification of the expansion by display or sound, or the range changing section 53 may provide notification of the expansion by display or sound after automatically expanding the range.

Specifically, the range changing section 53 compares each of the plurality of target sides that constitute the outer peripheral shape of the creation-capable area 63 with the corresponding side of the inner peripheral shape of the already worked region 62 (hereinafter referred to as "already worked side"). The already worked side of the already worked region 62 represents a shape that extends in the extending direction of the field and is not limited to a single straight line, but may include two or more straight lines or curve lines. As a comparison between each target side of the creation-capable area 63 and an already worked side of the already worked region 62 corresponding to the target side, the range changing section 53 calculates a separation distance from the already worked side to the target side, which is the separation distance separating outward (field outline 60 side) when viewed from the target side in the orthogonal direction relative to the target side, and determines whether or not the calculated separation distance is less than the predetermined distance threshold.

Then, the range changing section 53 automatically changes the range of the creation-capable area 63, so that the target side of the creation-capable area 63 with a separation distance less than the predetermined distance threshold is expanded by being moved parallel for a predetermined change distance. The predetermined change distance may be set, for example, to the separation distance from the already worked side to the target side, or to a predetermined distance that is determined in advance, or may be set arbitrarily by the worker. On the other hand, the range changing section 53 does not automatically expand the range of the creation-capable area 63 for the target side of the creation-capable area 63 with a separation distance equal to or greater than the predetermined distance threshold, because the outer periphery reaping traveling is often continued.

For example, as illustrated in Fig. 3, when the combine harvester 1 performs outer periphery reaping traveling along one of the target sides of the creation-capable area 63 in order to form the headland area 65 in the field, in a case in which the combine harvester 1 cannot turn around near the end part of the target side, or a manual traveling operation error occurs, the combine harvester 1 may perform reaping traveling while separating from the target side. Once separating from the target side, the combine harvester 1 will return to the outer periphery reaping traveling along the target side, so the already worked region 62 along the target side is formed in such a manner that a gap (remaining area 66) of the unworked region 61 is left between the already worked region 62 and the creation-capable area 63.

In Fig. 3, a traveling track 62a when the already worked region 62 is formed by outer periphery reaping traveling along the target side is indicated by a dashed line. Since the combine harvester 1 basically performs reaping traveling straightly, the remaining area 66 is formed in such a manner that a corner with a vertex 66a that is separated from the creation-capable area 63 appears. In contrast, in this embodiment, when the separation distance from the target side of the creation-capable area 63 to the vertex 66a of the remaining area 66 is less than the predetermined distance threshold, the range changing section 53 changes the range of the creation-capable area 63 such that the range is expanded to the already worked region 62, thereby the creation-capable area 63 includes the remaining area 66 of the unworked region 61, which enables automatic reaping without leaving the remaining area 66.

The above describes an example in which the range changing section 53 expands the target side by moving the target side parallel for a predetermined change distance when the separation distance from the already worked side to the target side is less than the predetermined distance threshold, but the present invention is not limited to this example. For example, the range changing section 53 may change the target side to a straight line that is parallel to a straight line connecting one end of the target side and the other end of the target side and that passes through the point, which is farthest separated from the target side, on the already worked side.

The range changing section 53 may also determine whether or not the already worked region 62 reaches each of the plurality of target sides of the creation-capable area 63, add a predetermined condition to the result of the determination, and change the range of the creation-capable area 63. For example, as for one of the already worked sides of the already worked region 62, if the position information of each point of the already worked side is within the range of the creation-capable area 63 (i.e., on the outer periphery of the creation-capable area 63 or inside the creation-capable area 63), the range changing section 53 determines that the already worked region 62 reaches the target side of the creation-capable area 63 corresponding to the already worked side. In this case, since the already worked region 62 is sufficiently formed with the creation-capable area 63 as a target, the range changing section 53 does not automatically expand the range of the creation-capable area 63.

If the position information of each point of the already worked side is not within the range of the creation-capable area 63, the range changing section 53 determines that the already worked region 62 does not reach the target side of the creation-capable area 63 corresponding to the already worked side. In this case, the range changing section 53 does not automatically expand the range of the creation-capable area 63, because the outer periphery reaping traveling is often continued. If the position information of each point of the already worked side is not within the range of the creation-capable area 63, and even if the already worked region 62 does not reach the creation-capable area 63, the range changing section 53 may automatically expand the range of the creation-capable area 63 to the already worked region 62 in response to manual operation by the worker.

Furthermore, if the position information of some points of the already worked side is within the range of the creation-capable area 63, but the position information of some points of the already worked side is not within the range of the creation-capable area 63, the range changing section 53 determines that the portion in which the already worked region 62 reaches the target side of the creation-capable area 63 corresponding to the already worked side and the portion in which the already worked region 62 does not reach the target side of the creation-capable area 63 corresponding to the already worked side are mixed. In this case, the range changing section 53 calculates the separation distance from each point of the already worked side to the target side, and if the longest separation distance is less than the predetermined distance threshold, the range changing section 53 automatically expands the range of the creation-capable area 63 to the already worked region 62. On the other hand, if the longest separation distance from each point of the already worked side to the target side is equal to or greater than the predetermined distance threshold, the range changing section 53 does not automatically expand the range of the creation-capable area 63 because the outer periphery reaping traveling is often continued.

The range changing section 53 may also change the range of the creation-capable area 63 based on the outer peripheral shape of the creation-capable area 63 that is set for the field as a predetermined condition. For example, when the target side of the creation-capable area 63 contains an obtuse angle in the middle, the range changing section 53 automatically changes the range of the creation-capable area 63, so that the target side is expanded by being moved parallel for a predetermined change distance. The predetermined change distance may be set, in the orthogonal direction relative to a straight line connecting one end of the target side and the other end of the target side, based on the separation distance from the vertex of the obtuse angle of the target side to the straight line, or may be set to a predetermined distance that is determined in advance, or may be set arbitrarily by the worker, for example.

To determine whether or not the target side contains an obtuse angle, the range changing section 53 calculates, when the target side does not consist of a single straight line but contains two or more straight lines or curve lines, the angle between two adjacent line segments, and determines whether or not the calculated angle is an obtuse angle, thereby detecting an obtuse angle from the target side. Alternatively, the range changing section 53 calculates, in the orthogonal direction relative to a straight line connecting one end of the target side and the other end of the target side, the separation distances from each point of the target side to the straight line, detects the point of the target side at which the longest separation distance is less than the predetermined distance threshold as a vertex, and then calculates the angle between the straight line from the vertex to one end of the target side and the straight line from the vertex to the other end of the target side, and determines whether or not the calculated angle is an obtuse angle, thereby detecting an obtuse angle from the target side. The range changing section 53 automatically changes the range of the creation-capable area 63 to expand the target side, either automatically when an obtuse angle is detected from the target side or in response to manual operation by the worker.

For example, as illustrated in Fig. 4, the target side of the creation-capable area 63 may be set to protrude outward in the field, such a creation-capable area 63 is set based on the field outline 60 when the field outline 60 of the field protrudes outward. An example is illustrated in Fig. 4 in which the target side consists of two straight lines, and the vertex 67a between the two lines is positioned protruding outward, and an obtuse angle is formed between the two straight lines. When the combine harvester 1 performs outer periphery reaping traveling along the target side to form the headland area 65 in the field, the combine harvester 1 performs reaping traveling straightly along one of the straight lines of the target side, then make a slight turn by manual traveling, and then performs reaping traveling straightly along the other straight line of the target side. Therefore, near the vertex 67a of the target side, the combine harvester 1 will perform reaping traveling while separating from the target side due to the slight turn, and the already worked region 62 along the target side is formed by leaving a gap (remaining area 67) of the unworked region 61 from the creation-capable area 63. In Fig. 4, a traveling track 62a when the already worked region 62 is formed by outer periphery reaping traveling along the target side is indicated by a dashed line. In contrast, in this embodiment, when the target side of the creation-capable area 63 contains an obtuse angle, the range changing section 53 changes the range of the creation-capable area 63 to expand the target side, thereby the creation-capable area 63 includes the remaining area 67 of the unworked region 61, which enables automatic reaping without leaving the remaining area 67.

Although the above describes an example in which the range changing section 53 expands the target side by moving the target side parallel for a predetermined change distance when the target side contains an obtuse angle, but the present invention is not limited to this example. For example, the range changing section 53 may change the target side to a straight line connecting one end of the target side and the other end of the target side, or a straight line that is parallel to the straight line described above and passing through the vertex 67a of the obtuse angle of the target side.

The range changing section 53 may also automatically change the range of the creation-capable area 63 based on the inner peripheral shape of the already worked region 62 (outer peripheral shape of the unworked region 61) recorded for the field as a predetermined condition. For example, when the already worked side of the already worked region 62 contains an obtuse angle in the middle, the range changing section 53 automatically changes the range of the creation-capable area 63, so that the target side corresponding to the already worked side is expanded by being moved parallel for a predetermined change distance. The predetermined change distance may be set, for example, in the orthogonal direction relative to a straight line connecting one end of the already worked side and the other end of the already worked side, based on the separation distance from the vertex of the obtuse angle of the already worked side to the straight line, or may be set to a predetermined distance that is determined in advance, or may be set arbitrarily by the worker.

To determine whether or not the already worked side contains an obtuse angle, the range changing section 53 calculates, when the already worked side does not consist of a single straight line but contains two or more straight lines or curve lines, the angle between two adjacent line segments, and determines whether or not the calculated angle is an obtuse angle, thereby detecting an obtuse angle from the already worked side. Alternatively, the range changing section 53 calculates, in the orthogonal direction relative to a straight line connecting one end of the already worked side and the other end of the already worked side, the separation distances from each point of the already worked side to the straight line, detects the point of the already worked side at which the longest separation distance is less than the predetermined distance threshold as a vertex, and then calculates the angle between the straight line from the vertex to one end of the already worked side and the straight line from the vertex to the other end of the already worked side, and determines whether or not the calculated angle is an obtuse angle, thereby detecting an obtuse angle from the already worked side. The range changing section 53 automatically changes the range of the creation-capable area 63 to expand the target side, either automatically when an obtuse angle is detected from the already worked side or in response to manual operation by the worker.

Although the above describes an example in which the range changing section 53 expands the target side by moving the target side parallel for a predetermined change distance when the already worked side contains an obtuse angle, but the present invention is not limited to this example. For example, the range changing section 53 may change the target side to a straight line that is parallel to a straight line connecting one end of the target side and the other end of the target side and that passes through the vertex of the obtuse angle of the already worked side.

The range changing section 53 may also change the range of the creation-capable area 63 in response to manual operation by the worker. For example, when the work screen 70 described below is displayed on the display section 44 of the portable terminal 40, and when the field outline 60, the unworked region 61, the already worked region 62, and the creation-capable area 63 are displayed schematically on the work screen 70, the range changing section 53 changes the creation-capable area 63 so as to expand or contract the creation-capable area 63 in response to manual operation using the work screen 70. In this case, the range changing section 53 allows expansion or contraction for each of the plurality of target sides that constitute the creation-capable area 63. For example, when the worker visually confirms areas in which rice is not being planted or areas in which rice plants are fallen over in the field, if these areas are within the range of the creation-capable area 63, in order to exclude these areas from the automatic reaping traveling, the worker changes the creation-capable area 63 so that these areas are not included.

The range changing section 53 changes the creation-capable area 63 by expanding the creation-capable area 63 with limitations such as the distance threshold described above only when a traveling pattern of reciprocating reaping is set to the combine harvester 1. On the other hand, the range changing section 53 may expand and change the creation-capable area 63 with no limitation on the distance threshold or the like when a traveling pattern of circumference reaping is set to the combine harvester 1. The range changing section 53 may also expand and change the creation-capable area 63 with no limitation on the distance threshold or the like when a traveling pattern of reciprocating reaping is set to the combine harvester 1 and when the expansion direction of the creation-capable area 63 is orthogonal to the reciprocating direction.

The automatic traveling route creation section 54 creates the automatic traveling route 64 for automatic reaping traveling in the field that is a target to be worked by automatic traveling, stores the automatic traveling route 64 in the storage section 42, and sends the automatic traveling route 64 to the combine harvester 1 via the communication section 43. In particular, in this embodiment, the automatic traveling route creation section 54 creates the automatic traveling route 64 so that the combine harvester 1 performs automatic reaping traveling within the range of the creation-capable area 63 after the creation-capable area 63 is set by the creation-capable area setting section 51 and the range of the creation-capable area 63 is changed by the range changing section 53 in some cases. The automatic traveling route 64 includes traveling information on the automatic traveling and work information on work such as automatic reaping. The traveling information includes the traveling position in the field as well as the traveling direction and the set vehicle speed at each traveling position. The work information includes information on the work such as the operation or stop of reaping, the reaping speed and reaping height at each traveling position. The automatic traveling route creation section 54 creates, for the field, a plurality of straight routes for reaping while traveling in the forward direction in response to a traveling pattern (reciprocating reaping or circumference reaping) selected by the operation of the portable terminal 40, and combines the plurality of straight routes and a plurality of turning routes, which connect each of the straight routes, thereby to create the automatic traveling route 64.

As illustrated in Figs. 3 and 4, the display control section 55 controls the display section 44 to display the work screen 70, which displays the field outline 60 of the field to be worked, the unworked region 61, the already worked region 62, and the creation-capable area 63. The work screen 70 includes a map column 71, and the display control section 55 schematically displays, in the map column 71, the field outline 60, the unworked region 61, the already worked region 62, and the creation-capable area 63 of the field, and further displays, in the map column 71, an own vehicle marker 72 of the combine harvester 1 at the combine harvester 1's own vehicle position positioned by the positioning unit 28 of the combine harvester 1.

The work screen 70 may be a screen for confirming the creation-capable area 63 or the automatic traveling route 64 in the field, or may be a screen for setting the creation-capable area 63 or the automatic traveling route 64, or may be a screen when executing the outer periphery reaping traveling or the automatic reaping traveling. The display control section 55 updates and displays the position of the own vehicle marker 72, the range of the unworked region 61, and the range of the already worked region 62 according to the progress of the reaping traveling of the combine harvester 1.

For example, after the creation-capable area 63 is set by the creation-capable area setting section 51, the display control section 55 displays the field outline 60, the unworked region 61, the already worked region 62, and the creation-capable area 63 on the work screen 70. The display control section 55 enables manual operations for changing the range of the creation-capable area 63 set by the creation-capable area setting section 51, such as the manual operation for changing each target side that constitutes the creation-capable area 63, to be received on the work screen 70. When the range of the creation-capable area 63 is changed by the range changing section 53, the display control section 55 may be able to receive a selection by manual operation of whether or not to change the creation-capable area 63 on the work screen 70. In this case, the creation-capable area 63 before the change and the creation-capable area 63 after the change may be distinguishably displayed. Furthermore, after the range of the creation-capable area 63 is changed by the range changing section 53, the display control section 55 may be able to receive manual operation to return the creation-capable area 63 back to the state before the change on the work screen 70.

After the range of the creation-capable area 63 is changed by the range changing section 53, the display control section 55 updates and displays, on the work screen 70, the creation-capable area 63 after the change. Furthermore, after the automatic traveling route 64 is created by the automatic traveling route creation section 54, the display control section 55 displays, on the work screen 70, the automatic traveling route 64 superimposed on the field outline 60, the unworked region 61, the already worked region 62, and the creation-capable area 63.

The display control section 55 distinguishably displays the field outline 60, the unworked region 61, the already worked region 62, and the creation-capable area 63 of the field by changing the line type, line color, background color, or the like. In addition, the display control section 55 distinguishably highlights, during the execution of the outer periphery reaping traveling or before the start of the automatic reaping traveling, the area other than the already worked region 62 (the area of the unworked region 61) located outside the range of the creation-capable area 63 in the field, as the remaining area 66 or 67 of the outer periphery reaping traveling, by means of line type, line color, background color, or the like. If such a remaining area 66 or 67 of the outer periphery reaping traveling occur, the display control section 55 may highlight the remaining area 66 or 67 and the surrounding area thereof with an enlarged display or the like.

As described above, according to the present embodiment, a work vehicle such as the combine harvester 1 comprises the portable terminal 40, and the portable terminal 40 comprises the control device 41. The control device 41 functions as the outline setting section 50 for setting the field outline 60, the creation-capable area setting section 51 for setting the creation-capable area 63 that is provided inside the field outline 60 and in which an automatic traveling route 64 can be created, and the range changing section 53 for changing the range of the creation-capable area 63.

In other words, in the present invention, an area setting method for setting an area in which a work vehicle such as the combine harvester 1 performs automatic traveling in a field comprises an outline setting step of setting the field outline 60, a creation-capable area setting step of setting the creation-capable area 63 that is provided inside the field outline 60 and in which the automatic traveling route 64 can be created, and a range changing step of changing the range of the creation-capable area 63.

As a result, the range of the creation-capable area 63 for performing automatic traveling can be changed automatically or in response to manual operations, according to the working state such as reaping, etc., thereby making it possible to set the creation-capable area 63 without leaving any unworked region 61 and perform automatic traveling. For example, when the combine harvester 1 performs outer periphery reaping traveling around the creation-capable area 63, even if the unworked region 61 is left protruding from the creation-capable area 63, the range of the creation-capable area 63 can be changed to include the remaining unworked region 61, so that the automatic reaping traveling can be performed without leaving any unreaped area (work remaining area 66 or 67). In addition, if an area within the range of the creation-capable area 63 occurs in which automatic traveling is not required, the combine harvester 1 can change the range of the creation-capable area 63 to exclude the area.

In addition, even if the combine harvester 1 is configured to control the automatic traveling route 64 not to be created within the creation-capable area 63 when it determines that the already worked region 62 does not reach the creation-capable area 63 (the unworked region 61 protrudes from the creation-capable area 63), but if the distance from the creation-capable area 63 to the already worked region 62 is less than the predetermined distance threshold, or in response to any operation by the worker, the range of the creation-capable area 63 can be expanded to the already worked region 62, so that the automatic traveling route 64 can be created. Furthermore, by expanding the creation-capable area 63 in this way, even if the combine harvester 1 does not return to the portion that does not reach the creation-capable area 63 and perform reaping traveling to make the already worked region 62 reach the creation-capable area 63, the combine harvester 1 can create the automatic traveling route 64 in the expanded creation-capable area 63 and perform the automatic reaping traveling.

According to this embodiment, in the combine harvester 1, the control device 41 of the portable terminal 40 functions as the work region determination section 52 for determining the already worked region 62 in which work has been performed in the field, and the display control section 55 that displays the field outline 60, the already worked region 62, and the creation-capable area 63.

As a result, the worker can perform work while confirming the creation-capable area 63 in the field and confirming the already worked region 62 that has been worked with the creation-capable area 63 as a target. The worker can also change the range of the creation-capable area 63 while confirming the portion in which the already worked region 62 does not reach the creation-capable area 63. This makes it possible to set the creation-capable area 63 without leaving any unworked region 61 and perform automatic traveling.

Furthermore, the display control section 55 distinguishably highlights the area other than the already worked region 62 (the area of the unworked region 61) located outside the range of the creation-capable area 63, as the remaining area 66 or 67, thereby the worker can work while recognizing the portion that protrudes from the creation-capable area 63, or if the creation-capable area 63 can be expanded by arbitrary operation of the worker, the worker can expand the creation-capable area 63 while looking at the display. In addition, even if the combine harvester 1 is configured to control the automatic traveling route 64 not to be created within the creation-capable area 63 when it determines that the already worked region 62 does not reach the creation-capable area 63 (the unworked region 61 protrudes from the creation-capable area 63), the worker, by referring to the highlighted remaining area 66 or 67, can determine where to reap to enable the automatic traveling route 64 to be created, or can determine where to expand to the creation-capable area 63 so that the automatic traveling route 64 can be created.

According to this embodiment, if the separation distance from the creation-capable area 63 to the already worked region 62 is less than the predetermined distance threshold, the range changing section 53 expands the range of the creation-capable area 63 to the already worked region 62.

As a result, if the remaining area 66 or 67 of about less than the distance threshold between the creation-capable area 63 and the already worked region 62 occurs, the creation-capable area 63 can be changed to include the remaining area 66 or 67. In this case, the change of the creation-capable area 63 is limited to less than the distance threshold, which prevents the headland area 65 around the creation-capable area 63 from being narrower than necessary.

According to this embodiment, the creation-capable area setting section 51 sets the creation-capable area 63 in such a manner that the outer periphery is formed by a plurality of sides (target sides). The range changing section 53 determines whether or not the already worked region 62 reaches each of the plurality of sides of the creation-capable area 63. When the unworked portion in which the already worked region 62 reaches the side of the creation-capable area 63 and the already worked portion in which the already worked region 62 does not reach the side of the creation-capable area 63 are mixed based on the result of the determination, and if the longest separation distance from the side to the already worked region 62 is less than the predetermined distance threshold, the range changing section 53 expands the range of the creation-capable area 63 to the already worked region 62.

As a result, if the already worked region 62 is separated at a plurality of positions relative to the side of the creation-capable area 63, since the separation distance of the most separated position is referenced, the creation-capable area 63 can be changed to include the remaining area 66 or 67 that includes all separation positions.

According to this embodiment, the range changing section 53 sets the predetermined distance threshold based on the working width of the work vehicle such as the combine harvester 1.

As a result, if the separation distance between the creation-capable area 63 and the already worked region 62 is too wide compared to the working width of the work vehicle, no change is made to expand the creation-capable area 63, so that the outer periphery reaping traveling can be urged to continue.

In addition, according to this embodiment, the range changing section 53 determines whether or not one side (target side) constituting the creation-capable area 63 has an obtuse angle, and if the one side has an obtuse angle, the range changing section 53 changes the range of the creation-capable area by expanding the range of the creation-capable area 63.

As a result, if one side of the creation-capable area 63 has an obtuse angle, the creation-capable area 63 is expanded in advance with the assumption that the combine harvester 1 makes a slight turn around the obtuse angle, so that the burden on the worker when traveling around the obtuse angle and the burden on the worker who operates to change the creation-capable area 63 can be reduced.

Alternatively, according to this embodiment, the range changing section 53 determines whether or not one side (already worked side) constituting the already worked region 62 in which work has been performed in the field has an obtuse angle, and if the one side has an obtuse angle, the range changing section 53 changes the range of the creation-capable area by expanding the range of the creation-capable area 63.

As a result, if one side of the already worked region 62 has an obtuse angle, the creation-capable area 63 is expanded in advance with the assumption that the combine harvester 1 makes a slight turn around the obtuse angle, so that the burden on the worker when traveling around the obtuse angle and the burden on the worker who operates to change the creation-capable area 63 can be reduced.

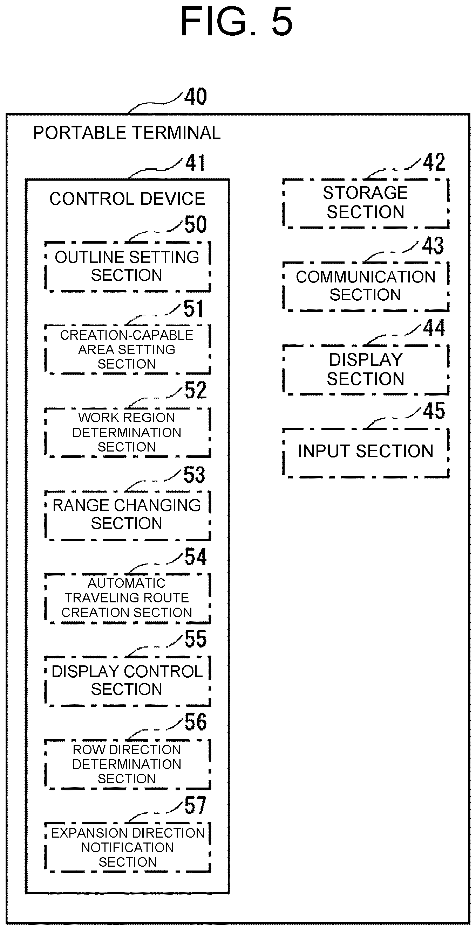

In another embodiment, in the combine harvester 1, the control device 41 of the portable terminal 40, by executing the program stored in the storage section 42, operates as the outline setting section 50, the creation-capable area setting section 51, the work region determination section 52, the range changing section 53, the automatic traveling route creation section 54, and the display control section 55, and also operates as a row direction determination section 56 and an expansion direction notification section 57 as illustrated in Fig. 5. The row direction determination section 56 and the expansion direction notification section 57 realize a row direction determining step and an expansion direction notifying step of the area setting method according to the present invention.

With grain culms are planted along a predetermined row direction in a field, as illustrated in Figs. 3 and 4, if the automatic traveling route 64 is created in the creation-capable area 63 with a traveling pattern of reciprocating reaping that reciprocates between a plurality of straight routes along the row direction, when the creation-capable area 63 is expanded in the row direction, the headland area 65 may become narrower resulting that turning traveling in the headland area 65 cannot be performed. Therefore, the row direction determination section 56 and the expansion direction notification section 57 are configured to notify the worker that the creation-capable area 63 is to be expanded in the row direction when such a case arises.

The row direction determination section 56 determines the row direction of grain culms planted in a plurality of rows in the field. For example, the row direction when a rice transplanter (not illustrated) transplants seedlings in the field is included in the field information and stored in a server (not illustrated) or the portable terminal 40, so that the row direction determination section 56 may read out the row direction of the field information from the server or the portable terminal 40 and determine the row direction. Alternatively, the row direction determination section 56 may determine the row direction based on the result of photography obtained by photographing the field by a camera (not illustrated) or the like installed in the combine harvester 1. In addition, the portable terminal 40 may allow the row direction to be set arbitrarily with respect to the field, and the row direction determination section 56 may read out and determine the set row direction.

The expansion direction notification section 57 determines whether or not the expansion direction of the creation-capable area 63 is in the row direction when the range changing section 53 expands the creation-capable area 63, and if the expansion direction is in the row direction, the expansion direction notification section 57 notifies the worker that the expansion direction of the creation-capable area 63 is in the row direction. For example, the expansion direction notification section 57 may notify, on the work screen 70 or other screens displayed on the display section 44 by the display control section 55, that the expansion direction of the creation-capable area 63 is in the row direction, and preferably, the expansion direction notification section 57 may distinguishably display the row direction in the unworked region 61, as well as in the creation-capable area 63.

Alternatively, the expansion direction notification section 57 may notify by voice, lamp, or other means that the expansion direction of the creation-capable area 63 is in the row direction. In addition, the expansion direction notification section 57 may be able to receive a selection by manual operation of whether or not to expand and change the creation-capable area 63 on the work screen 70 or other screens, and furthermore, the expansion direction notification section 57 may distinguishably display the creation-capable area 63 before the change and the creation-capable area 63 after the change. The expansion direction notification section 57 may also notify that the headland area 65 becomes narrower by expanding the creation-capable area 63, or that turning by automatic traveling becomes impossible.

As described above, according to the other embodiments, the combine harvester 1 notifies the worker that the creation-capable area 63 is to be expanded in the row direction when such a case arises, so that the worker can decide in advance whether or not to perform the automatic reaping traveling in the expanded creation-capable area 63.

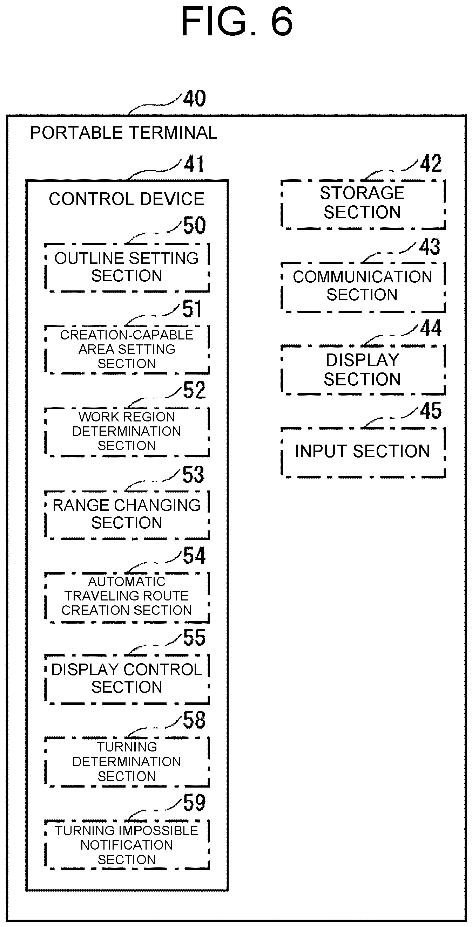

Furthermore, in another embodiment, in the combine harvester 1, the control device 41 of the portable terminal 40, by executing the program stored in the storage section 42, operates as the outline setting section 50, the creation-capable area setting section 51, the work region determination section 52, the range changing section 53, the automatic traveling route creation section 54, and the display control section 55, and also operates as a turning determination section 58 and a turning impossible notification section 59 as illustrated in Fig. 6. The turning determination section 58 and the turning impossible notification section 59 realize a turning determining step and a turning impossible notifying step of the area setting method according to the present invention.

If the creation-capable area 63 in the field is expanded, the headland area 65 will become narrower, and turning by automatic traveling in the headland area 65 may become impossible. Therefore, the turning determination section 58 and the turning impossible notification section 59 are configured to notify the worker that expanding the creation-capable area 63 causes turning by automatic traveling to become impossible in headland area 65 when such a case arises.

The combine harvester 1 has, as turning types for turning in headland area 65 in the automatic reaping traveling, the following three types that are selectable and operable: a standard type having the minimum turning radius as the state in which the combine harvester 1 can ordinarily turn, a small turn type having a turning radius smaller than in the standard type, and a soft type having the minimum turning radius as the state in which the combine harvester 1 safely turns under an adverse condition (muddy, etc.) with a turning radius larger than in the standard type. The selection operation of the turning type can be received by the portable terminal 40. Alternatively, the combine harvester 1 may have the turning type selectable and operable from multiple levels with different turning radii. The portable terminal 40 may also allow input operation of the turning radius when turning in the headland area 65 in the automatic reaping traveling.

The creation-capable area setting section 51 sets the headland area 65 that allow turning traveling by the turning type or the turning radius set as described above in the field, and also sets the creation-capable area 63 inside the headland area 65. When the combine harvester 1 performs the automatic reaping traveling along the automatic traveling route 64 created in the creation-capable area 63, the combine harvester 1 performs turning traveling with a turning radius according to the turning type set in advance or the turning type selected by the portable terminal 40, or with a turning radius set in advance or entered by the portable terminal 40.

The turning determination section 58 determines whether or not the combine harvester 1 can turn in automatic traveling based on the turning radius set for the combine harvester 1. For example, the turning determination section 58 refers to the automatic traveling route 64 created for the creation-capable area 63 by the automatic traveling route creation section 54 after the creation-capable area 63 is set by the creation-capable area setting section 51 and the range of the creation-capable area 63 is changed by the range changing section 53. In this case, the turning determination section 58 determines, in particular, whether or not turning routes of the automatic traveling route 64 are located within the range of a turning possible area, which is an area within the range of the field and is an area other than the creation-capable area 63 and the unworked region 61. Then, the turning determination section 58 determines that turning is possible when all of the turning routes are located within the range of the turning possible area, and on the other hand, the turning determination section 58 determines that turning is impossible when any of the turning routes passes outside the range of the turning possible area.

The turning impossible notification section 59 notifies that turning is impossible in a case in which the combine harvester 1 cannot turn by automatic traveling based on the set turning radius in an area other than the creation-capable area 63 (turning possible area) when the creation-capable area 63 is expanded. For example, when the turning determination section 58 determines that turning is impossible, the turning impossible notification section 59 may notify that turning is impossible due to the expansion of the creation-capable area 63 on the work screen 70 displayed on the display section 44 by the display control section 55, and preferably, may distinguishably display the turning routes along with the creation-capable area 63 and the headland area 65 on the work screen 70. Alternatively, the turning impossible notification section 59 may notify by voice, lamp, or other means that turning is impossible due to the expansion of the creation-capable area 63. In addition, the turning impossible notification section 59 may be able to receive a selection by manual operation of whether or not to expand and change the creation-capable area 63 on the work screen 70 or other screens, and furthermore, the turning impossible notification section 59 may distinguishably display the creation-capable area 63 before the change and the creation-capable area 63 after the change. The turning impossible notification section 59 may also highlight areas in which the turning route passes outside the range of the turning possible area with an enlarged display or other means.

Alternatively, when expanding the creation-capable area 63, even if the combine harvester 1 cannot turn by automatic traveling in the turning possible area based on the turning radius of the currently set turning type, but if the combine harvester 1 can turn by automatic traveling by changing to another turning type with a smaller turn (smaller turning radius) than the currently set turning type, the turning impossible notification section 59 may notify the worker of the fact, or the control device 41 may automatically change the currently set turning type to another turning type that the combine harvester 1 can turn by automatic traveling. For example, even if the combine harvester 1 cannot turn by automatic traveling with the soft type, the combine harvester 1 may be able to turn by automatic traveling by changing to the standard type or the small turn type, or even if the combine harvester 1 cannot turn by automatic traveling with the standard type, the combine harvester 1 may be able to turn by automatic traveling by changing to the small turn type. Thus, in such cases, it is preferable to have a notification recommending a change of the turning type or perform an automatic change of the turning type.

As described above, according to the other embodiment, the combine harvester 1 notifies the worker that the creation-capable area 63 is to be expanded when such a case arises, so that the worker can decide in advance whether or not to perform the automatic reaping traveling in the expanded creation-capable area 63.

In the above embodiments, the example of the combine harvester 1 composed of the head-feeding type combine harvester is described. However, the present invention is not limited to this example, and the combine harvester 1 may be composed of an ordinary-type combine harvester.

In the above embodiments, an example in which the work vehicle is composed of the combine harvester 1 is described, but the present invention is not limited to this example. For example, the work vehicle of the present invention may be composed of any other agricultural work machine for harvesting a crop, or may be composed of any work vehicle other than the agricultural work machine.

The present invention can be modified as appropriate to the extent not contradicting the gist or idea of the invention that can be read from the claims and the specification as a whole, and the area setting method, work vehicle and automatic traveling system with such modification are also included in the technical concept of the present invention.

### REFERENCE SIGNS LIST

- 1:: Combine harvester (work vehicle)

- 2:: Traveling part
- 3:: Reaping part
- 30:: Control device
- 35:: Reaping traveling control section
- 40:: Portable terminal
- 41:: Control device
- 50:: Outline setting section
- 51:: Creation-capable area setting section
- 52:: Work region determination section
- 53:: Range changing section
- 54:: Automatic traveling route creation section
- 55:: Display control section
- 56:: Row direction determination section
- 57:: Expansion direction notification section
- 58:: Turning determination section
- 59:: turning impossible notification section
- 60:: Field outline
- 61:: Unworked region
- 62:: Already worked region
- 63:: Creation-capable area
- 64:: Automatic traveling route
- 66, 67:: Remaining area

## Claims

1. An area setting method for setting an area in which a work vehicle performs automatic traveling in a field, the area setting method comprising:
an outline setting step of setting a field outline;
a creation-capable area setting step of setting a creation-capable area that is provided inside the field outline and in which an automatic traveling route can be created; and
a range changing step of changing a range of the creation-capable area.

2. The area setting method according to claim 1, further comprising:
a work region determining step of determining an already worked region in which work has been performed in the field; and
a displaying step of displaying the field outline, the already worked region, and the creation-capable area,
wherein the displaying step distinguishably displays an unworked portion in which the already worked region does not reach the creation-capable area.

3. The area setting method according to claim 2, wherein
if a separation distance from the creation-capable area to the already worked region is less than a predetermined distance threshold, the range changing step expands the range of the creation-capable area to the already worked region.

4. The area setting method according to claim 2 or 3, wherein
the creation-capable area setting step sets the creation-capable area in such a manner that an outer periphery of the creation-capable area is formed by a plurality of sides, and
the range changing step determines whether or not the already worked region reaches each of the plurality of sides, and when an unworked portion in which the already worked region reaches the side and an already worked portion in which the already worked region does not reach the side are mixed based on the result of the determination, and if the longest separation distance from the side to the already worked region is less than a predetermined distance threshold, the range changing step expands the range of the creation-capable area to the already worked region.

5. The area setting method according to claim 3 or 4, wherein
the range changing step sets the predetermined distance threshold based on a working width of the work vehicle.

6. The area setting method according to claim 1 or 2, wherein
the range changing step determines whether or not one side constituting the creation-capable area has an obtuse angle, and if the one side has the obtuse angle, the range changing step changes the range of the creation-capable area by expanding the range of the creation-capable area.

7. The area setting method according to claim 1 or 2, wherein
the range changing step determines whether or not one side constituting the already worked region in which work has been performed in the field has an obtuse angle, and if the one side has the obtuse angle, the range changing step changes the range of the creation-capable area by expanding the range of the creation-capable area.

8. The area setting method according to any one of claims 1 to 7, further comprising:
a row direction determining step of determining a row direction in the field; and
an expansion direction notifying step of notifying that an expansion direction of the creation-capable area is in the row direction when the creation-capable area is expanded in the row direction.

9. The area setting method according to any one of claims 1 to 8, further comprising:
a turning determining step of determining whether or not the work vehicle can turn based on a turning radius set for the work vehicle; and
a turning impossible notifying step of notifying that turning is impossible in a case in which the work vehicle cannot turn based on the turning radius in an area other than the creation-capable area when the creation-capable area is expanded.

10. A work vehicle that performs automatic traveling in a field, the work vehicle comprising:
an outline setting section setting a field outline;
a creation-capable area setting section setting a creation-capable area that is provided inside the field outline and in which an automatic traveling route can be created; and
a range changing section changing a range of the creation-capable area.

11. An automatic traveling system for causing a work vehicle to perform automatic traveling in a field, the automatic traveling system comprising:
an outline setting section setting a field outline;
a creation-capable area setting section setting a creation-capable area that is provided inside the field outline and in which an automatic traveling route can be created; and
a range changing section changing a range of the creation-capable area.
